# EUROPEAN PATENT APPLICATION

(11) **EP 4 721 841 A1**
(43) Date of publication of application: **08.04.2026**
(21) Application number: 24814543.5
(22) Date of filing: 30.05.2024
(51) Int. Cl.: B01D 53/18, B01D 53/14, B01D 53/26, B01D 47/14, B01D 47/12

(54) **CARBON DIOXIDE CAPTURE TOWER**

(30) Priority: 31.05.2023 CN 202310638293
(71) Applicant: Huaneng Clean Energy Research Institute, Beijing 102209 (CN); Zhengning Power Plant of Huaneng Longdong Energy Co., Ltd., Qingyang, Gansu 745306 (CN); Huaneng Group R&D Center Co., Ltd., Beijing 100031 (CN)
(72) Inventor: WANG, Huanjun, Beijing 102209 (CN); GUO, Dongfang, Beijing 102209 (CN); NIU, Hongwei, Beijing 102209 (CN); LIU, Lianbo, Beijing 102209 (CN); LIU, Niu, Beijing 102209 (CN); FAN, Jinhang, Beijing 102209 (CN); LIU, Hanming, Beijing 102209 (CN)
(74) Representative: Albert Catala, Andrea
(86) International application number: PCT/CN2024/096380
(87) International publication number: WO 2024/245347

(57) **Abstract**

The disclosure relates to the technical field of carbon dioxide capture, in particular to a carbon dioxide capture tower, which includes a pre-washing impurity removal section, a carbon dioxide absorption section and a flue gas washing section being sequentially arranged from bottom to top in a vertical direction, so that flue gas sequentially flows through the pre-washing impurity removal section, the carbon dioxide absorption section and the flue gas washing section. A carbon dioxide capture tower flue gas inlet is arranged on the pre-washing impurity removal section, and a carbon dioxide capture tower flue gas outlet is arranged on the flue gas washing section. The purpose of this disclosure is to provide a carbon dioxide capture tower aiming at the technical problems that the manufacturing cost of the flue gas carbon dioxide capture system is high and the workload of later operation, overhaul and maintenance is large.

## Description

### TECHNICAL FIELD

The disclosure relates to the technical field of carbon dioxide capture, in particular to a carbon dioxide capture tower.

### BACKGROUND

The basic process of flue gas carbon dioxide capture mainly consists of three parts: taking the absorption tower as the center, supplemented by pre-washing, gas-water separation and pressurization device; centered on the regeneration tower and reboiler, supplemented by regeneration gas, cooling gas, separator and reflux system. The parts between the above two are mainly carbon dioxide-rich absorption liquid, regenerative absorption liquid heat exchange system and filtration system. The pre-washing process is completed by a specially designed pre-washing tower, a flue gas pipeline is arranged to connect the pre-washing tower and the absorption tower, and a booster fan is arranged on the flue gas pipeline to overcome the resistance encountered by flue gas during transmission. In this setting with pre-washing tower and absorption tower to complete pre-washing process and carbon dioxide absorption process respectively, the pre-washing tower and absorption tower must be equipped with corresponding auxiliary systems, and flue gas pipelines and booster fans must be added to realize the transmission of flue gas between the pre-washing tower and absorption tower, which makes the manufacturing cost of flue gas carbon dioxide capture system higher, and the workload of later operation, maintenance and repair is heavier. At the same time, the double tower with the pre-washing tower and the absorption tower occupies a large area and is obviously restricted by the site.

### SUMMARY

The purpose of the disclosure is to provide a carbon dioxide capture tower aiming at at least one technical problem raised in the background.

In order to achieve the above purpose, the disclosure adopts the following technical scheme:
One aspect of the disclosure provides a carbon dioxide capture tower, which includes a pre-washing impurity removal section, a carbon dioxide absorption section and a flue gas washing section being sequentially arranged from bottom to top in a vertical direction, so that flue gas sequentially flows through the pre-washing impurity removal section, the carbon dioxide absorption section and the flue gas washing section, where a carbon dioxide capture tower flue gas inlet is arranged on the pre-washing impurity removal section, and a carbon dioxide capture tower flue gas outlet is arranged on the flue gas washing section.

Optionally, the pre-washing impurity removal section includes a gas distributor, a first liquid collector, an impurity removal filler, a pre-washing liquid distributor and a pre-washing liquid feed pipe being sequentially arranged from bottom to top, and the pre-washing liquid feed pipe is communicated with the pre-washing liquid distributor to supply pre-washing liquid for pre-washing flue gas to the pre-washing liquid distributor through the pre-washing liquid feed pipe.

The technical scheme has the beneficial effects that the flue gas can be relatively evenly distributed in the pre-washing impurity removal section after entering the pre-washing impurity removal section through the gas distributor, the pre-washing liquid enters the pre-washing liquid distributor from the pre-washing liquid feed pipe, and the pre-washing liquid fully contacts with the flue gas in the impurity removal filler through the relatively even distribution of the pre-washing liquid distributor, so that the removal of trace gypsum and other impurities is realized, and the pre-cleaning solution after impurity removal falls into the first liquid collector for collection.

Optionally, the carbon dioxide absorption section includes a plurality of sections arranged in the vertical direction, and one of the plurality of sections is a liquid collection section, where the liquid collection section is located at a lowest position in the plurality of sections, and the liquid collection section includes a liquid collector, and the liquid collector includes a mist catcher.

The technical scheme has the beneficial effects that the lean liquid is effectively prevented from leaking to the pre-washing impurity removal section by adopting the mist catcher.

Optionally, one of the plurality of sections is a lean liquid absorption section including a second liquid collector, a first absorption filler, a lean liquid distributor and a lean liquid feed pipe sequentially arranged from bottom to top, where the second liquid collector is used for flue gas to pass through, and the lean liquid feed pipe is communicated with the lean liquid distributor.

The technical scheme has the beneficial effects that the flue gas flows through the second liquid collector and the first absorption filler in the lean liquid absorption section, and the lean liquid flows into the lean liquid distributor through the feed pipe and is evenly sprayed to the first absorption filler, and the flue gas and the lean liquid fully contact in the first absorption filler, so that the lean liquid absorbs carbon dioxide in the flue gas.

Optionally, one of the plurality of sections is a cooling absorption section, and the liquid collection section, the cooling absorption section and the lean liquid absorption section are sequentially arranged from bottom to top, and the cooling absorption section is used for cooling the flue gas and absorbing carbon dioxide in the flue gas.

The technical scheme has the beneficial effects that: in this way, it is equivalent to the fact that carbon dioxide can be removed from the flue gas in both the cooling absorption section and the lean liquid absorption section, so that possible carbon dioxide residues in the flue gas are reduced to a great extent; and when the absorption filler is arranged in the liquid collection section, the lean liquid can also absorb carbon dioxide in the flue gas in the liquid collection section.

Optionally, the cooling absorption section includes a third liquid collector, a second absorption filler, an absorption cooling liquid distributor and an absorption cooling liquid feed pipe being sequentially arranged from bottom to top, where the third liquid collector is used for flue gas to pass through, and the absorption cooling liquid feed pipe is communicated with the absorption cooling liquid distributor.

The technical scheme has the beneficial effects that: in this way, the flue gas fully contacts with the lean liquid in the process of sequentially flowing through the cooling absorption section and the lean liquid absorption section, and the lean liquid absorbs the carbon dioxide in the flue gas, and at the same time, the lean liquid also cools the flue gas, which greatly reduces the possible carbon dioxide residue in the flue gas finally discharged from the carbon dioxide capture tower, and greatly reduces the temperature of the flue gas before being discharged from the carbon dioxide capture tower.

Optionally, the flue gas washing section includes a washing section and a defoaming section, and the washing section is located below the defoaming section.

The technical scheme has the beneficial effects that: the harmful components possibly existing in the flue gas can be reduced to a great extent by washing the flue gas again, so that these harmful components are not easily discharged from the carbon dioxide capture tower, and the harmful substances in the carbon dioxide capture tower are not easily discharged from the tower in the form of foam by setting the defoaming section.

Optionally, the defoaming section includes a fourth liquid collector, a first washing filler, a first washing liquid distributor, a first washing liquid feed pipe and a wire mesh defoamer being sequentially arranged from bottom to top, where the first washing liquid feed pipe is communicated with the first washing liquid distributor, and the fourth liquid collector is used for flue gas to pass through.

The technical scheme has the beneficial effects that: in the defoaming section, the flue gas flows through the fourth liquid collector and the first washing filler in turn, and the washing liquid enters the first washing liquid distributor through the first washing liquid feed pipe and is evenly distributed on the first washing filler. In the first washing filler, the flue gas and the washing liquid fully contact to absorb the solution components in the flue gas, so that the solution components are not easy to escape with the flue gas and cause loss and secondary pollution. And the wire mesh defoamer makes the solution components in the flue gas not easy to flow out of the carbon dioxide capture tower in the form of foam, thereby further reducing the possibility of solution components escaping and secondary pollution.

Optionally, the washing section includes a fifth liquid collector, a second washing filler, a second washing liquid distributor and a second washing liquid feed pipe, where the second washing liquid distributor is communicated with the second washing liquid feed pipe, and the fifth liquid collector is used for flue gas to pass through.

The technical scheme has the beneficial effects that: in the washing section, the flue gas flows through the fifth liquid collector and the second washing filler in turn, and the washing liquid enters the second washing liquid distributor through the second washing liquid feed pipe and is evenly distributed on the second washing filler. In the second washing filler, the flue gas and the washing liquid fully contact to absorb the solution components in the flue gas, so that the solution is not easy to escape with the flue gas and cause loss and secondary pollution. By washing the flue gas twice and defoaming the flue gas once by the washing section and defoaming section, the solution components that may be carried by the flue gas are intercepted triple, which makes it difficult for the solution components to escape with the flue gas. In some ideal cases, the flue gas washing section can also intercept all the solution components carried in the flue gas.

Optionally, the carbon dioxide capture tower further includes a washing liquid circulation system, where the washing section and the defoaming section are both connected with the washing liquid circulation system, and the washing liquid circulation system is used for supplying washing liquid to the washing section and the defoaming section, and the washing liquid circulation system is used for receiving washing liquid flowing out from the washing section and the defoaming section.

The technical scheme has the beneficial effects that: in this way, the washing liquid can be recycled through the washing liquid circulation system, and the cost is saved.

The technical scheme provided by the disclosure can achieve the following beneficial effects.

In the carbon dioxide capture tower provided by the disclosure, the pre-washing impurity removal section, the carbon dioxide absorption section and the flue gas washing section are arranged in the same tower, so that the pre-washing procedure and the carbon dioxide absorption procedure are carried out in the same tower, and only one set of auxiliary system is needed for one tower, and the flue gas pipeline and the booster fan used to connect the pre-washing tower and the absorption tower in the past are eliminated, so that the manufacturing cost of the carbon dioxide capture system is reduced, the initial investment of the project is lower, and the control requirements are also reduced. At the same time, compared with the maintenance of the pre-washing tower and the absorption tower and the corresponding auxiliary system, only maintaining the carbon dioxide capture tower and the corresponding auxiliary system reduces the workload of later operation and maintenance. In addition, compared with the traditional carbon dioxide capture system which uses two towers, namely the pre-washing tower and the absorption tower, to complete the two processes of pre-washing and carbon dioxide absorption, in the carbon dioxide capture system of the carbon dioxide capture tower provided by the embodiment of the disclosure, pre-washing and carbon dioxide absorption can be completed in one tower, which effectively reduces the occupied area of carbon dioxide capture system, making the layout of carbon dioxide capture system relatively flexible and less limited by the site. Moreover, the two processes of pre-washing and carbon dioxide absorption are completed by using the pre-washing tower and the absorption tower, which have poor adaptability to load and high energy consumption under low load conditions. However, the carbon dioxide capture tower provided by the disclosure is convenient to operate, has high adaptability to load and low energy consumption under low load conditions.

In order to make the above and other objects, features and advantages of the disclosure more obvious and easy to understand, the following is a detailed description of preferred embodiments, with the accompanying drawings.

### BRIEF DESCRIPTION OF THE DRAWINGS

In order to more clearly explain the embodiments of the disclosure or the technical scheme in the prior art, the drawings needed to be used in the description of the embodiments or the prior art will be briefly introduced below. Obviously, the drawings in the following description are only some embodiments of the disclosure, and other drawings can be obtained according to these drawings without creative work for ordinary skilled in the field.
FIG. 1 is a schematic structural diagram of an embodiment of a carbon dioxide capture tower according to an embodiment of the disclosure;
FIG. 2 is a partial structural schematic diagram of an embodiment of the carbon dioxide capture tower according to an embodiment of the disclosure;
FIG. 3 is a schematic diagram of a liquid collector with a mist catching device according to an embodiment of the disclosure; and
FIG. 4 is another schematic diagram of the liquid collector with a mist catching device according to an embodiment of the disclosure.

List of reference characters: 01 flue gas washing section; 02 carbon dioxide absorption section; 03 pre-washing liquid distributor; 04 pre-washing impurity removal section; 05 second washing liquid distributor; 06 second liquid collector; 07 absorption cooling liquid distributor; 08 third liquid collector; 09 liquid collector; 10 impurity removal filler; 11 support beam; 12 first liquid collector; 13 gas distributor; 14 support grid; 15 pressure plate; 16 pre-washing liquid feed pipe; 17 absorption filler; 18 second absorption filler; 19 absorption cooling liquid feed pipe; 20 first absorption filler; 21 lean liquid distributor; 22 second washing liquid feed pipe; 23 first washing liquid distributor; 24 first washing liquid feed pipe; 25 wire mesh defoamer; 26 lean liquid feed pipe; 27 fourth liquid collector; 28 first washing filler; 29 fifth liquid collector; 30 second washing filler; 1 bottom plate; 2 gas lifting tube; 3 gas lifting cap; 5 flanging; and 4 mist catching device.

### DETAILED DESCRIPTION OF THE EMBODIMENTS

In the following, the technical scheme of this disclosure will be described clearly and completely with the attached drawings. Obviously, the described embodiments are part of this disclosure, not all of the embodiments. Based on the embodiments in this disclosure, all other embodiments obtained by ordinary skilled in this field without creative work belong to the protection scope of this disclosure.

In the description of this disclosure, it should be noted that the azimuth or positional relationship indicated by the terms "center", "upper", "lower", "left", "right", "vertical", "horizontal", "inner" and "outer" are based on the azimuth or positional relationship shown in the attached drawings, and are only for the convenience of describing this disclosure and simplifying the description, and rather than indicating or implying that the referred device or element must have a specific orientation, be constructed and operate in a specific orientation, and therefore should not be construed as a limitation of this disclosure. In addition, the terms "first", "second" and "third" are only used for descriptive purposes and cannot be understood as indicating or implying relative importance.

In the description of this disclosure, it should be noted that unless otherwise specified and limited, the terms "installation", "connection" and "connecting" should be broadly understood, for example, they can be fixed connection, can also be detachable connection or integrated connection. It can be a mechanical connection, can also be an electrical connection; can be directly connected, can also be indirectly connected through an intermediate medium, and can be connected inside two elements. For those skilled in the art, the specific meanings of the above terms in this disclosure can be understood in specific circumstances.

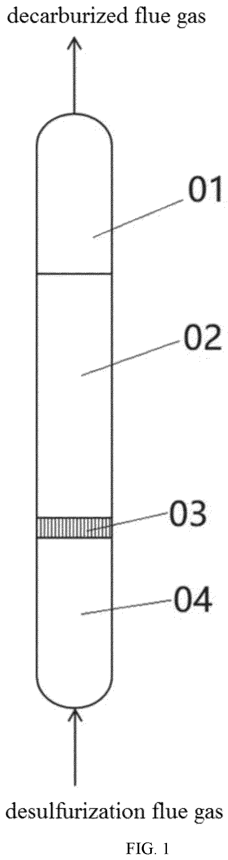

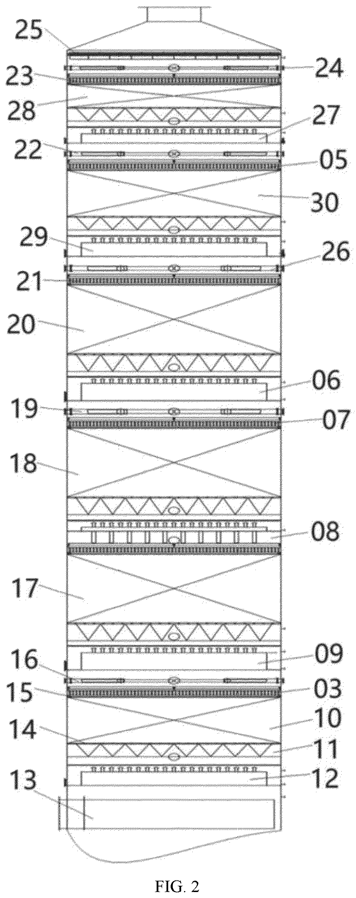

As shown in FIG. 1 and FIG. 2, one aspect of the disclosure provides a carbon dioxide capture tower, which includes a pre-washing impurity removal section 04, a carbon dioxide absorption section 02 and a flue gas washing section 01 which are sequentially arranged from bottom to top in the vertical direction, so that flue gas can flow through the pre-washing impurity removal section 04, the carbon dioxide absorption section 02 and the flue gas washing section 01 in turn. The pre-washing impurity removal section 04 is provided with a carbon dioxide capture tower flue gas inlet, and the flue gas washing section is provided with a carbon dioxide capture tower flue gas outlet.

When in use, the desulfurized flue gas enters the pre-washing impurity removal section 04 from the carbon dioxide capture tower flue gas inlet, flows through the pre-washing impurity removal section 04, the carbon dioxide absorption section 02 and the flue gas washing section 01 in turn, and finally flows out of the carbon dioxide capture tower from the carbon dioxide capture tower flue gas outlet. The flue gas is pretreated in the pre-washing impurity removal section 04 to remove impurities such as trace gypsum carried in the flue gas. The flue gas flows from bottom to top in the carbon dioxide absorption section 02, and makes countercurrent contact with the lean liquid sprayed into the tower from the upper part, so as to remove carbon dioxide. The flue gas enters the flue gas washing section 01, it is washed by direct spray in the flue gas washing section 01 to recover the solution components carried by the flue gas, so that the solution is not easy to cause loss and secondary pollution with the escape of the flue gas, and finally decarbonized flue gas is discharged from the carbon dioxide capture tower. In the embodiment of this disclosure, the amine solution that has not absorbed carbon dioxide is called lean solution, and the amine solution is called rich solution after absorbing carbon dioxide, and the lean solution can also be called carbon capture absorption solution.

In the carbon dioxide capture tower provided by the disclosure, the pre-washing impurity removal section 04, the carbon dioxide absorption section 02 and the flue gas washing section 01 are arranged in the same tower, so that the pre-washing procedure and the carbon dioxide absorption procedure are carried out in the same tower, and only one set of auxiliary system is needed for one tower (including but not limited to the bottom support system), and the flue gas pipeline and the booster fan used to connect the pre-washing tower and the absorption tower in the past are eliminated, so that the manufacturing cost of the carbon dioxide capture system is reduced, the initial investment of the project is lower, and the control requirements are also reduced. At the same time, compared with the maintenance of the pre-washing tower and the absorption tower and the corresponding auxiliary system, only maintaining the carbon dioxide capture tower and the corresponding auxiliary system reduces the workload of later operation and maintenance. In addition, compared with the traditional carbon dioxide capture system which uses two towers, namely the pre-washing tower and the absorption tower, to complete the two processes of pre-washing and carbon dioxide absorption, in the carbon dioxide capture system of the carbon dioxide capture tower provided by the embodiment of the disclosure, pre-washing and carbon dioxide absorption can be completed in one tower, which effectively reduces the occupied area of carbon dioxide capture system, making the layout of carbon dioxide capture system relatively flexible and less limited by the site. Moreover, the two processes of pre-washing and carbon dioxide absorption are completed by using the pre-washing tower and the absorption tower, which have poor adaptability to load and high energy consumption under low load conditions. However, the carbon dioxide capture tower provided by the disclosure is convenient to operate, has high adaptability to load and low energy consumption under low load conditions.

Optionally, the pre-washing impurity removal section 04 includes a gas distributor 13, a first liquid collector 12, the impurity removal filler 10, a pre-washing liquid distributor 03 and a pre-washing liquid feed pipe 16 being sequentially arranged from bottom to top, and the pre-washing liquid feed pipe 16 is communicated with the pre-washing liquid distributor 03 to supply pre-washing liquid for pre-washing flue gas to the pre-washing liquid distributor 03 through the pre-washing liquid feed pipe 16. The technical scheme has the beneficial effects that the flue gas can be relatively evenly distributed in the pre-washing impurity removal section 04 after entering the pre-washing impurity removal section 04 through the gas distributor 13, the pre-washing liquid enters the pre-washing liquid distributor 03 from the pre-washing liquid feed pipe 16, and the pre-washing liquid fully contacts with the flue gas in the impurity removal filler 10 through the relatively even distribution of the pre-washing liquid distributor 03, so that the removal of trace gypsum and other impurities is realized, and the pre-cleaning solution after impurity removal falls into the first liquid collector 12 for collection. The pre-washing liquid distributor 03 is preferably a liquid spraying device.

Optionally, the carbon dioxide absorption section 02 includes a plurality of sections arranged in the vertical direction, and one of the plurality of sections is a liquid collection section, where the liquid collection section is located at a lowest position in the plurality of sections, and the liquid collection section includes a liquid collector 09, and the liquid collector 09 includes a mist catcher. The mist catcher described in the embodiment of the disclosure is a mist catcher or other mist catching device. The lean liquid is effectively prevented from leaking to the pre-washing impurity removal section 04 by adopting the mist catcher. Preferably, the liquid collection section further includes an absorption filler 17, the absorption filler 17 is arranged above the liquid collector 09, and the flue gas in the liquid collection section flows through the liquid collector 09 and the absorption filler 17 in turn, and the lean liquid flowing into the liquid collection section from above fully contacts with the flue gas in the absorption filler 17, so that the lean liquid can absorb carbon dioxide in the flue gas.

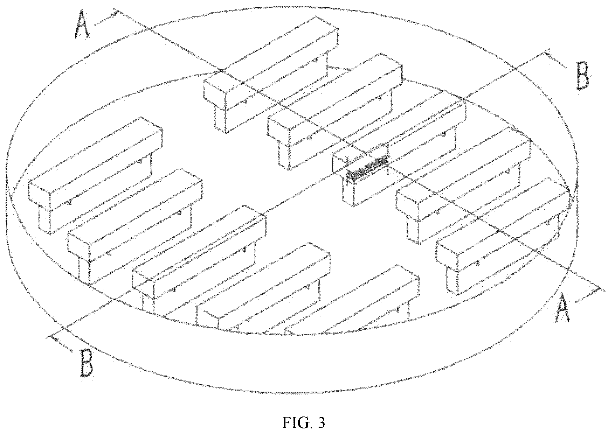

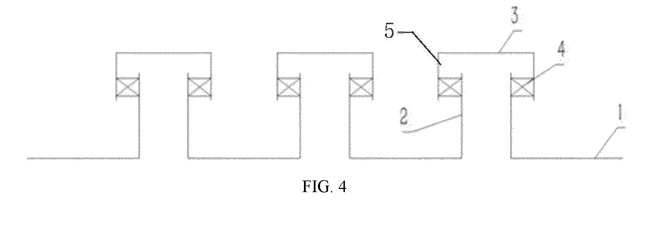

As shown in FIG. 3 and FIG. 4, a liquid collector with a mist catching device provided for an embodiment of the disclosure includes a bottom plate 1, a gas lifting tube 2 and a gas lifting cap 3, where the gas lifting cap has a top plate and a flanging 5, and the flanging 5 of the gas lifting cap faces downward, and the mist catching device 4 is arranged in the space formed between the gas lifting tube and the flanging 5 of the gas lifting cap.

According to the disclosure, the mist catching device 4 is arranged between the gas lifting tube 2 and the flanging 5 of the gas lifting cap, so that the back mixing of the liquid above and below the liquid collector is prevented.

Optionally, one of the plurality of sections is a lean liquid absorption section including a second liquid collector 06, a first absorption filler 20, a lean liquid distributor 21 and a lean liquid feed pipe 26 sequentially arranged from bottom to top, where the second liquid collector 06 is used for flue gas to pass through, and the lean liquid feed pipe 26 is communicated with the lean liquid distributor 21. It can be understood that the lean liquid absorption section and the liquid collection section are not the same section, The second liquid collector 06 is preferably a gas lifting liquid collector. The flue gas flows through the second liquid collector 06 and the first absorption filler 20 in the lean liquid absorption section, and the lean liquid flows into the lean liquid distributor 21 through the feed pipe and is evenly sprayed to the first absorption filler 20, and the flue gas and the lean liquid fully contact in the first absorption filler 20, so that the lean liquid absorbs carbon dioxide in the flue gas. The lean liquid distributor 21 is preferably a liquid spraying device.

Optionally, one of the plurality of sections is a cooling absorption section, and the liquid collection section, the cooling absorption section and the lean liquid absorption section are sequentially arranged from bottom to top, and the cooling absorption section is used for cooling the flue gas and absorbing carbon dioxide in the flue gas. In this way, it is equivalent to the fact that carbon dioxide can be removed from the flue gas in both the cooling absorption section and the lean liquid absorption section, so that possible carbon dioxide residues in the flue gas are reduced to a great extent; and when the absorption filler 17 is arranged in the liquid collection section, the lean liquid can also absorb carbon dioxide in the flue gas in the liquid collection section.

Optionally, the cooling absorption section includes a third liquid collector 08, a second absorption filler 18, an absorption cooling liquid distributor 07 and an absorption cooling liquid feed pipe 19 being sequentially arranged from bottom to top, where the third liquid collector 08 is used for flue gas to pass through, and the absorption cooling liquid feed pipe 19 is communicated with the absorption cooling liquid distributor 07. In the embodiment of the disclosure, it is preferable to adopt an amine solution which is also a lean solution as the absorption cooling liquid. In this way, the flue gas fully contacts with the lean liquid in the process of sequentially flowing through the cooling absorption section and the lean liquid absorption section, and the lean liquid absorbs the carbon dioxide in the flue gas, and at the same time, the lean liquid also cools the flue gas, which greatly reduces the possible carbon dioxide residue in the flue gas finally discharged from the carbon dioxide capture tower, and greatly reduces the temperature of the flue gas before being discharged from the carbon dioxide capture tower. The third liquid collector 08 is preferably a gas lifting cap liquid collector; the absorption cooling liquid distributor 07 is preferably a liquid spraying device.

Optionally, the flue gas washing section 01 includes a washing section and a defoaming section, and the washing section is located below the defoaming section. The the harmful components possibly existing in the flue gas can be reduced to a great extent by washing the flue gas again, so that these harmful components are not easily discharged from the carbon dioxide capture tower, and the harmful substances in the carbon dioxide capture tower are not easily discharged from the tower in the form of foam by setting the defoaming section.

Optionally, the defoaming section includes a fourth liquid collector 27, a first washing filler 28, a first washing liquid distributor 23, a first washing liquid feed pipe 24 and a wire mesh defoamer 25 being sequentially arranged from bottom to top, where the first washing liquid feed pipe 24 is communicated with the first washing liquid distributor 23, and the fourth liquid collector 27 is used for flue gas to pass through. In the embodiment of the disclosure, the fourth liquid collector 27 is preferably a gas lifting cap liquid collector, and the first washing liquid distributor 23 is preferably a liquid spraying device. In the defoaming section, the flue gas flows through the fourth liquid collector 27 and the first washing filler 28 in turn, and the washing liquid enters the first washing liquid distributor 23 through the first washing liquid feed pipe 24 and is evenly distributed on the first washing filler 28. In the first washing filler 28, the flue gas and the washing liquid fully contact to absorb the solution components in the flue gas, so that the solution components are not easy to escape with the flue gas and cause loss and secondary pollution. And the wire mesh defoamer 25 makes the solution components in the flue gas not easy to flow out of the carbon dioxide capture tower in the form of foam, thereby further reducing the possibility of solution components escaping and secondary pollution.

Optionally, the washing section includes a fifth liquid collector 29, a second washing filler 30, a second washing liquid distributor 05 and a second washing liquid feed pipe 22, where the second washing liquid distributor 05 is communicated with the second washing liquid feed pipe 22, and the fifth liquid collector 29 is used for flue gas to pass through. In the embodiment of the disclosure, the fifth liquid collector 29 is preferably a gas lifting cap liquid collector, and the second washing liquid distributor 05 is preferably a liquid spraying device. In the washing section, the flue gas flows through the fifth liquid collector 29 and the second washing filler 30 in turn, and the washing liquid enters the second washing liquid distributor 05 through the second washing liquid feed pipe 22 and is evenly distributed on the second washing filler 30. In the second washing filler 30, the flue gas and the washing liquid fully contact to absorb the solution components in the flue gas, so that the solution is not easy to escape with the flue gas and cause loss and secondary pollution. By washing the flue gas twice and defoaming the flue gas once by the washing section and defoaming section, the solution components that may be carried by the flue gas are intercepted triple, which makes it difficult for the solution components to escape with the flue gas. In some ideal cases, the flue gas washing section 01 can also intercept all the solution components carried in the flue gas.

Optionally, the carbon dioxide capture tower provided by the embodiment of the disclosure further includes a washing liquid circulation system. where the washing section and the defoaming section are both connected with the washing liquid circulation system, and the washing liquid circulation system is used for supplying washing liquid to the washing section and the defoaming section, and the washing liquid circulation system is used for receiving washing liquid flowing out from the washing section and the defoaming section. In this way, the washing liquid can be recycled through the washing liquid circulation system, and the cost is saved. Preferably, the washing liquid circulation system has a water replenishing function, and when washing liquid is lost, demineralized water as washing liquid can be supplemented.

Preferably, in the embodiment of this disclosure, all fillers are provided with auxiliary assemblies for supporting and fixing fillers, and the auxiliary assemblies may include a support beam 11, a support grid 14 and a pressure plate 15, etc. For example, in the embodiment of this disclosure, the pre-washing impurity removal section 04 further includes a support beam 11, a support grid 14 and a pressure plate 15. The gas distributor 13, the first liquid collector 12, the support beam 11, the support grid 14, the impurity removal filler 10, the pressure plate 15, the pre-washing liquid distributor 03 and the pre-washing liquid feed pipe 16 are sequentially arranged from bottom to top, the support beam 11 and the support grid 14 are used for supporting the impurity removal filler 10, and the pressure plate 15 is used for pressing the impurity removal filler 10. In the embodiment of this disclosure, the filler used in flue gas washing section 01 and pre-washing impurity removal section 04 is preferably PP (that is polypropylene), and the filler used in carbon dioxide absorption section 02 is preferably 304 stainless steel, such as 304 stainless steel regular corrugated filler, 304 stainless steel regular filler or 304 metal honeycomb inclined plate filler. The pre-washing solution in the embodiment of the disclosure is preferably a low-concentration sodium hydroxide aqueous solution, that is, an alkali solution.

In order to better explain the carbon dioxide capture tower provided by this disclosure, this disclosure also provides an application example of the carbon dioxide capture tower. In this application example, the pre-washing impurity removal section 04 is also called the pre-washing section, the carbon dioxide absorption section 02 is also called the absorption section, the flue gas washing section 01 is also called the washing section, the support beam 11 is also called the filler support beam, and the carbon dioxide capture tower is also called the composite absorption tower. The application example is as follows.

This application example relates to a new-type composite absorption tower for carbon dioxide capture, which has the functions of a pre-washing tower and an absorption tower in the traditional process, that is, flue gas is washed, cooled, CO₂ recovery in the CO₂ composite absorption tower, and then washed and cooled, and then discharged from the top of the CO₂ composite absorption tower.

The basic process of flue gas CO₂ capture mainly consists of three parts: the absorption tower as the center, supplemented by pre-washing, gas-water separation and pressurization device; centered on the regeneration tower and reboiler, supplemented by regeneration gas, cooling gas, separator and reflux system; between the above two parts, there are mainly CO₂-rich absorption liquid, regenerative absorption liquid heat exchange system and filtration system.

The temperature of flue gas discharged from the outlet is about 48°C, which is the ideal absorption temperature range of amine solution. The flue gas is pretreated in the pre-washing tower to remove trace gypsum and other impurities carried by the flue gas. Booster fan is used to overcome the resistance of gas passing through pretreatment system and absorption tower.

In the absorption tower, the flue gas flows from bottom to top, and contacts with the amine solution sprayed into the tower from the upper part in countercurrent, so that CO₂ is removed, and the tail gas is discharged into the atmosphere from the top of the tower. In order to prevent the loss and secondary pollution caused by the escape of the solution with the flue gas, a tail gas washing section is arranged at the top of the absorption tower, and the solution components carried by the flue gas are recovered by direct spray washing. The washing water is recycled. When the capture system needs to replenish water, firstly, the washing water is replenished for the system, and the lost washing water is supplemented by demineralized water.

The rich liquid after absorbing CO₂ is pumped into the rich-poor liquid heat exchanger from the bottom of the tower, sprayed into the upper part of the regeneration tower, and part of CO₂ is desorbed by gas stripping. After gas stripping and desorption, the semi-lean liquid enters the reboiler to further desorb CO₂. The lean solution desorbed CO₂ by the reboiler flows out from the bottom of the regeneration tower, is cooled by the lean-rich solution heat exchanger and the lean-rich solution cooler, and then enters the absorption tower for recycling. The solvent cycle constitutes the process of continuous absorption and desorption of CO₂.

After the desorbed CO₂ and water vapor are cooled, high-purity CO₂ gas is obtained after water is separated and removed, and sent to the subsequent compression system. The condensed water separated from the regeneration gas is pumped to the regeneration tower to adjust the temperature in the regeneration tower.

In order to keep the solution clean, about 10-15% of the lean solution is filtered by an activated carbon filter. In order to treat the degradation products of the system, a solution purification and recovery system is set up. When necessary, part of the lean solution is sent to the purification and recovery system, and the certain proportion of alkali solution is added for purification and recovery.

In the above process, the pre-washing tower and the absorption tower are set separately, and there are the following problems. First, the configuration of the two towers and their relatively complete auxiliary systems makes the system process relatively complicated, with high control requirements, high initial investment of the project and heavy workload of later operation, maintenance and repair. Second, because two towers are installed, the floor area is larger than that of a single tower, and the application is obviously restricted by the site. Third, poor adaptability to load and high energy consumption under low load conditions.

The composite absorption tower proposed in this application example combines the pre-washing tower and the absorption tower into one, and the flue gas from the desulfurization system of the unit first enters the pre-washing section of the composite absorption tower to pretreat the flue gas to remove impurities such as trace gypsum carried by the flue gas; and then enters the absorption section of the composite absorption tower for decarbonization treatment; finally, the flue gas enters the washing section to recover the solution components carried by the flue gas. That is, the flue gas is washed, cooled and CO₂ recovery in the CO₂ composite absorption tower, and then discharged from the top of the CO₂ composite absorption tower after washing and cooling.

Compared with the two towers (pre-washing tower and absorption tower), the composite absorption tower has the advantages that: firstly, the two towers are integrated, the process of carbon capture system is relatively simple, the initial investment of the project is low, and the maintenance workload in the later operation is small; secondly, the floor area is smaller than that of a single tower, and the application is less restricted by the site; thirdly, it is easy to operate, with high adaptability to load and low energy consumption under low load conditions.

The composite absorption tower includes a pre-washing section, an absorption section and a washing section from bottom to top, and the flue gas enters the composite absorption tower from the bottom of the tower, where the functions of each section are as follows.

Firstly, in the pre-washing section, the flue gas is pretreated to remove trace gypsum and other impurities carried by the flue gas.

Secondly, in the absorption section, the flue gas flows from bottom to top, and contacts with the carbon capture absorption solution sprayed into the tower from the upper part in countercurrent, so that CO₂ is removed, and the tail gas enters the washing section.

Thirdly, liquid collectors with mist catching devices are arranged in the pre-washing section and the absorption section to prevent the caught solution from leaking to the pre-washing section.

Fourthly, in the washing section, the solution components carried by the flue gas are recovered by direct spray washing, so as to avoid the loss and secondary pollution caused by the escape of the solution with the flue gas. The washing water can be recycled. When the capture system needs to replenish water, firstly, the washing water is replenished for the system, and the lost washing water is supplemented by demineralized water.

In detailed scheme of composite absorption tower, specific structure of each section is as follows.

Firstly, in the pre-washing section (Bed6), the structural arrangement should be arranged with gas distributor, liquid collector, filler support beam, support grid, filler, pressure plate, liquid distributor and feed pipe from bottom to top in turn.

Secondly, in the absorption section (Bed3-5), the structural arrangement of Bed5 should be liquid collector, filler and its auxiliary assemblies from bottom to top in turn; the structural arrangement of Bed4 should be liquid collector, filler and its auxiliary assemblies, liquid distributor and intermediate absorption cooling feed pipe in turn; the structural arrangement of Bed3 should be liquid collector, filler and its auxiliary assemblies, liquid distributor and lean liquid feed pipe in turn.

Thirdly, in the tail gas washing section (Bed1-2), the structural arrangement of Bed2 should be liquid collector, filler and its auxiliary assemblies, liquid distributor and lower section washing liquid feed pipe in turn; the structural arrangement of Bed1 should be liquid collector, filler and its auxiliary assemblies, liquid distributor, upper section washing liquid feed pipe, wire mesh defoamer and its auxiliary assemblies in turn.

The composite absorption tower proposed in this application example combines the pre-washing tower and the absorption tower into one, and the flue gas from the desulfurization system of the unit first enters the pre-washing section of the composite absorption tower to pretreat the flue gas to remove impurities such as trace gypsum carried by the flue gas; then enter an absorption tower for decarbonization treatment; finally, the flue gas enters the washing section again to recover the solution components carried by the flue gas. That is, the flue gas is washed, cooled and CO₂ recovery in the CO₂ composite absorption tower, and then discharged from the top of the CO₂ composite absorption tower after washing and cooling.

Compared with the two towers (pre-washing tower and absorption tower), the composite absorption tower has the advantages that: first, the two towers are integrated, the process of carbon capture system is relatively simple, the initial investment of the project is low, and the maintenance workload in the later operation is small; second, the floor area is smaller than that of a single tower, and the application is less restricted by the site; third, it is easy to operate, with high adaptability to load and low energy consumption under low load conditions.

Finally, it should be explained that the above embodiments are only used to illustrate the technical scheme of the disclosure, but not to limit it. Although the disclosure has been described in detail with reference to the foregoing embodiments, it should be understood by those skilled in the art that the technical scheme described in the foregoing embodiments can still be modified, or some or all of its technical features can be replaced by equivalents. However, these modifications or substitutions do not make the essence of the corresponding technical solutions deviate from the scope of the technical solutions of various embodiments of this disclosure.

## Claims

1. A carbon dioxide capture tower, wherein the carbon dioxide capture tower comprises a pre-washing impurity removal section, a carbon dioxide absorption section and a flue gas washing section being sequentially arranged from bottom to top in a vertical direction, so that flue gas sequentially flows through the pre-washing impurity removal section, the carbon dioxide absorption section and the flue gas washing section, wherein a carbon dioxide capture tower flue gas inlet is arranged on the pre-washing impurity removal section, and a carbon dioxide capture tower flue gas outlet is arranged on the flue gas washing section.

2. The carbon dioxide capture tower according to claim 1, wherein the pre-washing impurity removal section comprises a gas distributor, a first liquid collector, an impurity removal filler, a pre-washing liquid distributor and a pre-washing liquid feed pipe being sequentially arranged from bottom to top, and the pre-washing liquid feed pipe is communicated with the pre-washing liquid distributor to supply pre-washing liquid for pre-washing flue gas to the pre-washing liquid distributor through the pre-washing liquid feed pipe.

3. The carbon dioxide capture tower according to claim 1, wherein the carbon dioxide absorption section comprises a plurality of sections arranged in the vertical direction, and one of the plurality of sections is a liquid collection section, wherein the liquid collection section is located at a lowest position in the plurality of sections, and the liquid collection section comprises a liquid collector, and the liquid collector comprises a mist catcher.

4. The carbon dioxide capture tower according to claim 3, wherein one of the plurality of sections is a lean liquid absorption section comprising a second liquid collector, a first absorption filler, a lean liquid distributor and a lean liquid feed pipe sequentially arranged from bottom to top, wherein the second liquid collector is used for flue gas to pass through, and the lean liquid feed pipe is communicated with the lean liquid distributor.

5. The carbon dioxide capture tower according to claim 4, wherein one of the plurality of sections is a cooling absorption section, and the liquid collection section, the cooling absorption section and the lean liquid absorption section are sequentially arranged from bottom to top, and the cooling absorption section is used for cooling the flue gas and absorbing carbon dioxide in the flue gas.

6. The carbon dioxide capture tower according to claim 5, wherein the cooling absorption section comprises a third liquid collector, a second absorption filler, an absorption cooling liquid distributor and an absorption cooling liquid feed pipe being sequentially arranged from bottom to top, wherein the third liquid collector is used for flue gas to pass through, and the absorption cooling liquid feed pipe is communicated with the absorption cooling liquid distributor.

7. The carbon dioxide capture tower according to any one of claims 1 to 6, wherein the flue gas washing section comprises a washing section and a defoaming section, and the washing section is located below the defoaming section.

8. The carbon dioxide capture tower according to claim 7, wherein the defoaming section comprises a fourth liquid collector, a first washing filler, a first washing liquid distributor, a first washing liquid feed pipe and a wire mesh defoamer being sequentially arranged from bottom to top, wherein the first washing liquid feed pipe is communicated with the first washing liquid distributor, and the fourth liquid collector is used for flue gas to pass through.

9. The carbon dioxide capture tower according to claim 7, wherein the washing section comprises a fifth liquid collector, a second washing filler, a second washing liquid distributor and a second washing liquid feed pipe, wherein the second washing liquid distributor is communicated with the second washing liquid feed pipe, and the fifth liquid collector is used for flue gas to pass through.

10. The carbon dioxide capture tower according to claim 7, further comprising a washing liquid circulation system, wherein the washing section and the defoaming section are both connected with the washing liquid circulation system, and the washing liquid circulation system is used for supplying washing liquid to the washing section and the defoaming section, and the washing liquid circulation system is used for receiving washing liquid flowing out from the washing section and the defoaming section.
